# EUROPEAN PATENT APPLICATION

(11) **EP 3 054 114 A1**
(43) Date of publication of application: **10.08.2016**
(21) Application number: 16154814.4
(22) Date of filing: 09.02.2016
(51) Int. Cl.: F01D 25/16, F01D 25/24, F02C 7/06

(54) **FORWARD FLANGE AND CONE WALL STRESS DEFLECTION MANAGEMENT**

(30) Priority: 09.02.2015 US 201514617597
(71) Applicant: United Technologies Corporation, Farmington, CT 06032 (US)
(72) Inventor: BAUER, Steven J., East Haddam, CT Connecticut 06423 (US); DALE, Timothy, Manchester, CT Connecticut 06042 (US); WITLICKI, Russell B., Wethersfield, CT Connecticut 06109 (US)
(74) Representative: Gittins, Alex Michael

(57) **Abstract**

System for an engine of an aircraft, comprising an inner case (206), a bearing compartment (212), and an inner case flange (310-1) and a bearing compartment flange (311-1) coupling the inner case (206) and the bearing compartment (212), wherein the bearing compartment flange (311-1) is oriented at an angle of approximately 15.5 degrees relative to an axial direction of the engine, and system for an engine of an aircraft, comprising an inner case (206), a bearing compartment (212), and flanges coupling the inner case (206) and the bearing compartment (212) at a forward end of the inner case (206) and the bearing compartment (212).

## Description

### BACKGROUND

In aircraft engine environments, turbine frames (case-rod-case structures) support, or are associated with, a bearing housing. There may be large thermal gradients between the frame structure and the bearing housing. For example, the bearing housing is typically colder due to the presence of oil. If these thermal gradients are not managed, components and devices of the engine may be subject to stress or deflection. Furthermore, component/device lifetimes may be reduced due to such thermal gradients.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a system associated with an engine of an aircraft, comprising: an inner case, a bearing compartment, and an inner case flange and a bearing compartment flange coupling the inner case and the bearing compartment, wherein the bearing compartment flange is oriented at an angle of approximately 15.5 degrees relative to an axial direction of the engine. In some embodiments, the system further comprises a seal located on an aft end of the inner case. In some embodiments, the seal is a low pressure turbine seal. In some embodiments, the inner case flange is located on a forward end of the inner case. In some embodiments, the bearing compartment flange is located on a forward end of the bearing compartment.

Aspects of the disclosure are directed to a system associated with an engine of an aircraft, comprising: an inner case, a bearing compartment, and flanges coupling the inner case and the bearing compartment at a forward end of the inner case and the bearing compartment. In some embodiments, the system comprises: an outer case and a tie rod that couples the outer case and the inner case.

### BRIEF DESCRIPTION OF THE DRAWINGS

The present disclosure is illustrated by way of example and not limited in the accompanying figures in which like reference numerals indicate similar elements.
FIG. 1 illustrates an embodiment of a gas turbine engine.
FIG. 2 illustrates a system associated with a frame and a bearing compartment in accordance with the prior art.
FIG. 3 illustrates an embodiment of a system associated with a frame and a bearing compartment incorporating a cone-shaped forward flange in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for placing one or more flanges or cone structures to manage thermal gradients experienced in an engine environment.

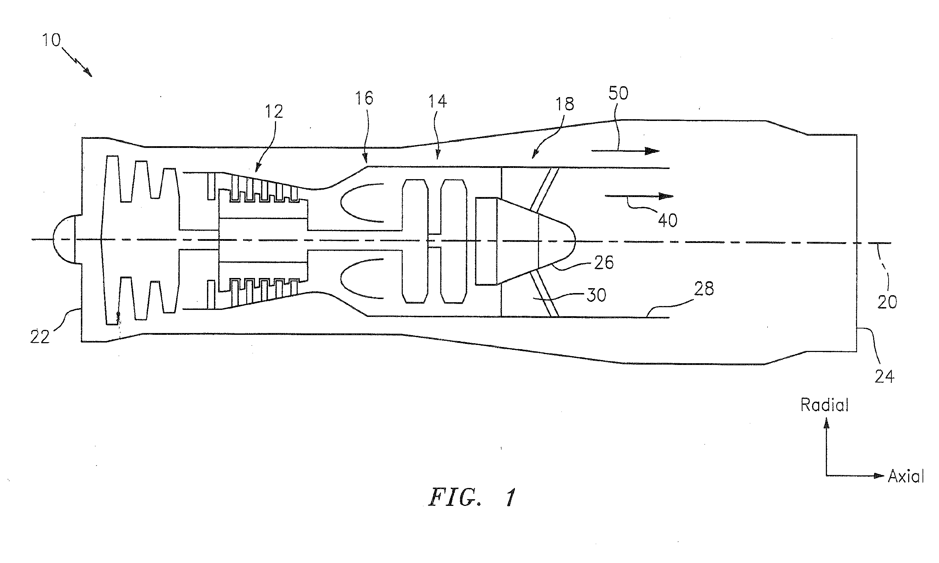

Aspects of the disclosure may be applied in connection with a gas turbine engine. For example, FIG. 1 is a side-sectional illustration of a gas turbine engine 10. The engine 10 includes a compressor section 12, a turbine section 14 and one or more engine hot sections. The engine hot sections may include, for example, a first engine hot section 16 configured as a combustor section and a second engine hot section 18 configured as an augmentor section. The compressor section 12, the first engine hot section 16, the turbine section 14 and the second engine hot section 18 may be sequentially aligned along an axial centerline 20 between a forward engine airflow inlet 22 and an aft engine airflow exhaust 24. The second engine hot section 18 may include a first (e.g., annular, radial inner) duct case 26, a second (e.g., annular, radial outer) duct case 28, and one or more hot section vanes 30.

One skilled in the art would appreciate that, in connection with the design and operation of an engine (e.g., engine 10), there may exist at least two flows. A first such flow, which may be referred to as a core flow 40, may pass through the engine hardware and be subjected to combustion in, e.g., the first engine hot section 16. A secondary flow, which may be referred to as a bypass flow 50, bypasses the engine core. A bypass ratio may be established for denoting the ratio between the bypass flow 50 and the core flow 40. The bypass ratio may be one measure of the efficiency (e.g., the fuel efficiency) of the engine 10.

FIG. 1 represents one possible configuration for an engine 10. Aspects of the disclosure may be applied in connection with other engine configurations.

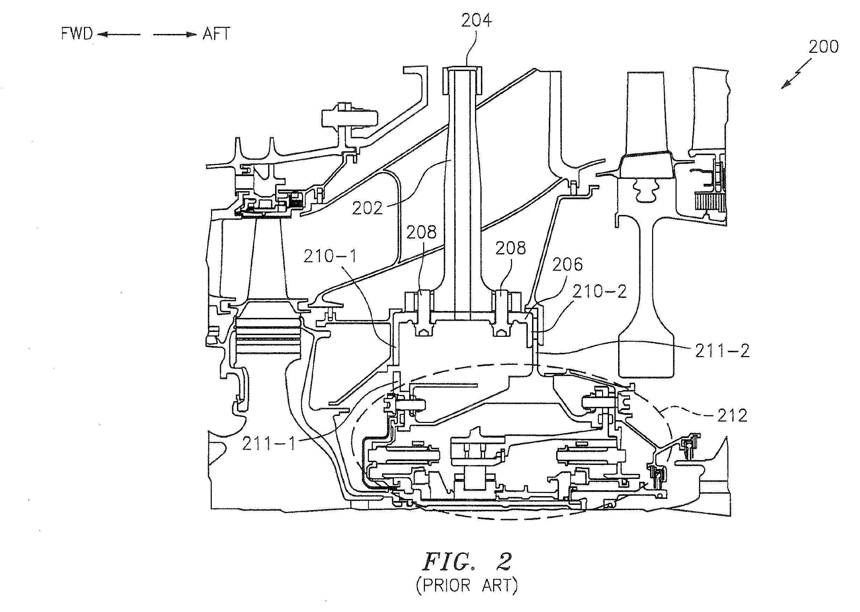

Referring now to FIG. 2, a system 200 in accordance with the prior art is shown. The system 200 may be implemented as part of an engine, such as for example engine 10 described above. The system 200 may be associated with a frame of the engine, such as a so-called mid-turbine frame as would be known to one of skill in the art.

The system 200 includes a tie rod 202 that couples an outer case 204 to an inner case 206. The tie rod 202 is coupled to the inner case 206 via one or more bolts 208. The inner case 206 includes, or is associated with, inner case flanges 210-1 and 210-2. The inner case flange 210-1 is forward (fwd) of the inner case flange 210-2.

The system 200 includes bearing compartment flanges 211-1 and 211-2. The bearing compartment flange 211-1 is forward (fwd) of the bearing compartment flange 211-2.

The flanges 211-2 and 210-2 couple the inner case 206 to a bearing compartment 212 (denoted in FIG. 2 via the dashed oval), such that a structural connection is formed. There is no structural connection between the inner case flange 210-1 and the bearing compartment flange 211-1.

Thermal gradients between the various components, e.g., the inner case 206 and the bearing compartment 212, of the system 200 may be relatively large. As shown in FIG. 2, the flanges 210-1, 210-2, 211-1, and 211-2 are generally oriented perpendicular (e.g., approximately 90 degrees) to the engine forward (fwd) and aft directions (e.g., the axial direction - see FIG. 1), or analogously, are oriented parallel to the radial direction (e.g., see FIG. 1) associated with the engine. This arrangement is not optimum in terms of the thermal management of the inner case 206 and the bearing compartment 212.

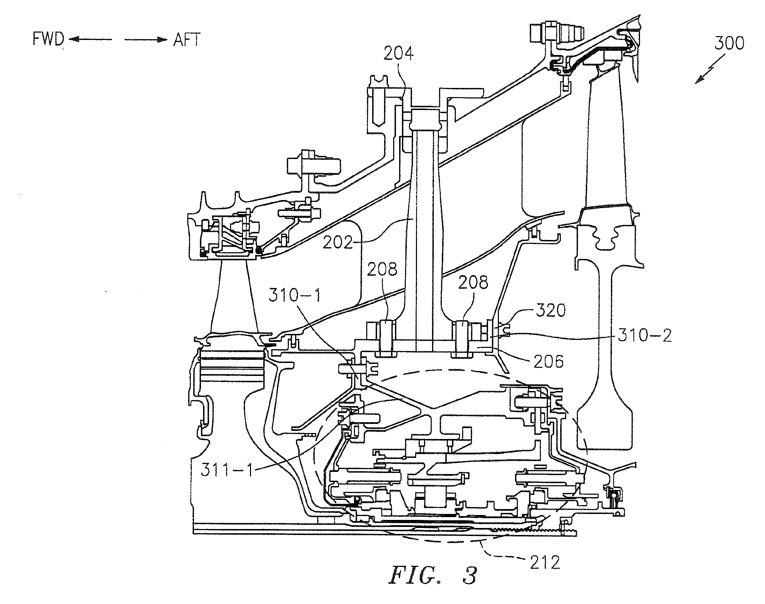

In contrast to the system 200 of FIG. 2, FIG. 3 illustrates a system 300 in accordance with aspects of the disclosure. The system 300 includes many of the components/devices described above in connection with FIG. 2, and so, a complete re-description is omitted for the sake of brevity.

In the system 300, the inner case 206 may be coupled to the bearing compartment 212 by an inner case flange 310-1 and a bearing compartment flange 311-1. Such a coupling may include, or facilitate, a structural connection. Flange 310-1 is forward of an inner case flange 310-2, or analogously, inner case flange 310-2 is aft of the inner case flange 310-1. Inner case flange 310-1 may be located on a forward end of the inner case 206, whereas inner case flange 310-2 may be located on an aft end of the inner case 206. The bearing compartment flange 311-1 may be located on a forward end of the bearing compartment 212. The inner case flange 310-2 may not share a structural connection to the bearing compartment 212.

In contrast to the bearing compartment flange 211-2, the bearing compartment flange 311-1 may not be oriented perpendicular to the axial direction associated with the engine. Instead, the bearing compartment flange 311-1 may be oriented at an angle relative to the axial direction, such that a taper or cone-shaped profile for the wall associated with the bearing compartment flange 311-1 is formed. This angle may be equal to 15.5 degrees, or approximately equal to 15.5 degrees, as measured relative to the axial direction. The angle may vary based on one or more tolerances (e.g., a cone wall tolerance).

Aspects of the disclosure may be used to control/manage deflection of the inner case 206. For example, by incorporating an angle in connection with the bearing compartment flange 311-1, the inner case 206 may be subject to a more uniform deflection (forward-to-aft) in the radial direction.

Also included in the system 300 is a seal 320, such as for example a lower pressure turbine (LPT) seal. The seal 320 may be located on an aft end of the inner case 206.

A large pressure differential may exist across the seal 320, which may cause a large axial load to be imposed on the inner case 206, such that the inner case 206 may be inclined to move in the aft direction. Thermal differences between the inner case 206 and the bearing compartment 212 may impose a force that tends to cause the inner case 206 to move/expand outboard in the radial direction (e.g., in an upward direction in FIG. 3) in an amount that is greater or faster than the tendency for the bearing compartment 212 to move in that same direction. The fact that the bearing compartment flange 311-1 is cone-shaped/angled may generate a mechanical moment/coupling/advantage to counteract a tendency for the bearing compartment 212 to move in the forward direction.

Technical effects and benefits of this disclosure include: 1) a reduction in a bearing operational axial displacement range, 2) a reduction in terms of stresses imposed on components/devices, 3) increased component/device life compared to conventional vertical flange connections of a hot mid turbine frame to a cooler bearing compartment, 4) location of an inner case relative to a bearing flange, enabling a smaller range of a thermal gradient that a cone needs to react to or support, 5) placement of a flange axially in relation to an inner case rod joint interface and service tube bosses, in conjunction with wall stiffness and temperature considerations, serving to increase a flange lifetime.

Aspects of the disclosure have been described in terms of illustrative embodiments thereo£ Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure.

## Claims

1. A system associated with an engine of an aircraft, comprising:
an inner case (206);
a bearing compartment (212); and
an inner case flange (310-1) and a bearing compartment flange (311-1) coupling the inner case (206) and the bearing compartment (212),
wherein the bearing compartment flange (311-1) is oriented at an angle of approximately 15.5 degrees relative to an axial direction of the engine.

2. The system of claim 1, further comprising:
a seal (320) located on an aft end of the inner case (206).

3. The system of claim 2, wherein the seal (320) is a low pressure turbine seal.

4. The system of claim 1, 2 or 3, wherein the inner case flange (310-1) is located on a forward end of the inner case (206).

5. The system of any preceding claim, wherein the bearing compartment flange (311-1) is located on a forward end of the bearing compartment (212).

6. A system associated with an engine of an aircraft, comprising:
an inner case (206);
a bearing compartment (212); and
flanges coupling the inner case (206) and the bearing compartment (212) at a forward end of the inner case (206) and the bearing compartment (212).

7. The system of claim 6, further comprising:
an outer case; and
a tie rod that couples the outer case and the inner case.
